# EUROPÄISCHE PATENTSCHRIFT

(11) **EP 3 547 619 B1**
(45) Veröffentlichungstag und Bekanntmachung des Hinweises auf die Patenterteilung: **03.06.2020**
(21) Anmeldenummer: 19165425.0
(22) Anmeldetag: 27.03.2019
(51) Int. Cl.: H04L 12/40

(54) **PLANUNG DER ÜBERTRAGUNG IN EINEM BUSSYSTEM**
SCHEDULING THE TRANSMISSION IN A BUS SYSTEM
ORDONNANCEMENT DE LA TRANSMISSION DANS UN SYSTÈME DE BUS

(30) Priorität: 27.03.2018 JP 2018060416
(43) Veröffentlichungstag der Anmeldung: 02.10.2019
(73) Patentinhaber: YAZAKI CORPORATION, Minato-ku, Tokyo 108-8333 (JP)
(72) Erfinder: NAKAGAWA, Satoshi, Makinohara-shi, Shizuoka 421-0407 (JP); SUGIMOTO, Terumitsu, Makinohara-shi, Shizuoka 421-0407 (JP)
(74) Vertreter: Grünecker Patent- und Rechtsanwälte PartG mbB

(56) Entgegenhaltungen:
- EP-A1- 2 381 627
- DE-A1-102016 222 433
- DE-U1-202016 104 113
- US-A1- 2015 334 060

## Beschreibung

Die vorliegende Anwendung bezieht sich auf eine Technik zum Senden und Empfangen eines Steuersignals für den Betrieb von Lasten über ein Netzwerk.

Wenn eine an einem Fahrzeug angebrachte Last betrieben wird, wird ein Steuersignal von einer übergeordneten Steuerung, die den Betrieb der Last steuert, an eine untergeordnete Steuerung übertragen, die die Last tatsächlich über ein Netzwerk im Fahrzeug betreibt. Zu diesem Zeitpunkt, wenn eine Vielzahl von Lasten zu unterschiedlichen Zeiten betrieben wird, wird für jede Last ein dem Betriebszeitpunkt der Last entsprechendes Steuersignal von der oberen Steuerung an die untere Steuerung übertragen.

Wenn beispielsweise zehn LED-Vorrichtungen, die an einem Fahrzeug als Beleuchtungsvorrichtung im Fahrzeuginnenraum montiert sind, in kleinen Abständen weißes Licht emittieren, werden zehn Arten von Steuersignalen, die dem Lichtaustrittsmuster der LED-Vorrichtungen entsprechen, von der übergeordneten Steuerung an die untergeordnete Steuerung übertragen, die jede LED-Vorrichtung über das Netzwerk im Fahrzeuginneren bedient (siehe JP 2017-084573 A (Patentfamilie: US 2017/0118816 A1)).

EP 2 381 627 A1 betrifft ein Verfahren zur Übertragung von Nachrichten innerhalb eines Netzwerkes, wobei durch Steuerung der Zeiten der übertragenen Nachrichten vermieden werden, dass sich Nachrichten gegenseitig stören.

In neueren Fahrzeugen werden eine Vielzahl von Netzwerktypen mit unterschiedlichen Kommunikationsgeschwindigkeiten (Kommunikationskapazität) montiert, und ein Netzwerk wird entsprechend dem Grad der Bedeutung eines zu übertragenden Inhalts und einer erforderlichen Reaktionsgeschwindigkeit richtig ausgewählt und verwendet. Daher wird beispielsweise ein Netzwerk mit einer relativ niedrigen Kommunikationsgeschwindigkeit (Kommunikationskapazität) zur Übertragung eines Signals mit einer geringen direkten Relevanz für den sicheren Betrieb des Fahrzeugs und zur Übertragung eines Signals verwendet, das keine sofortige Reaktion erfordert.

Werden daher Befehlssignale für die LED-Vorrichtungen von der übergeordneten Steuerung an die untergeordnete Steuerung über ein Netzwerk mit einer relativ niedrigen Kommunikationsgeschwindigkeit (Kommunikationskapazität) übertragen, um die Vielzahl der LED-Vorrichtungen dazu zu bringen, in kleinen Abständen sequentiell Licht zu emittieren, können die Übertragungsintervalle zwischen den nacheinander zu übertragenden Befehlssignalen nicht kleiner als eine Obergrenze sein. Daher können die LED-Vorrichtungen dazu gebracht werden, Licht nur mit einer Zeitdifferenz von einer bestimmten Zeit oder mehr sequentiell zu emittieren, wodurch das Lichtaustrittsmuster der Vielzahl von LED-Vorrichtungen eingeschränkt wird.

Die vorliegende Anwendung wurde unter Berücksichtigung der oben genannten Umstände erstellt, und ein Ziel der vorliegenden Anwendung ist es, einen Netzwerkknoten, ein Netzwerkkommunikationssystem und ein Netzwerkkommunikationsverfahren bereitzustellen, das es einem Knoten als Übertragungsquelle ermöglicht, Befehlssignale zum sequentiellen Betrieb einer Vielzahl von Lasten mit kurzer Zeitdifferenz zu übertragen, selbst wenn ein Netzwerk mit einer relativ niedrigen Kommunikationsgeschwindigkeit (Kommunikationskapazität) verwendet wird.

Die Erfindung ist durch die unabhängigen Ansprüche definiert. Die abhängigen Ansprüche beschreiben vorteilhafte Ausführungsformen.

Ein Netzwerkknoten gemäß einem ersten Aspekt der vorliegenden Anwendung umfasst eine Unterscheidungseinheit, die konfiguriert ist, um zu unterscheiden, ob ein eigener Ausgangsport als Befehlsziel in einem von einem Netzwerk empfangenen Befehlssignal angegeben ist oder nicht, eine Angegebene-Zahlen-Erfassungseinheit, die konfiguriert ist, um aus dem Befehlssignal eine angegebene Zahl in einer angegebenen Reihenfolge zu erfassen, im Befehlssignal des eigenen Ausgangsports, der durch die Unterscheidungseinheit als das im Befehlssignal angegebene Befehlsziel unterschieden wird, eine Verzögerungsinformationserfassungseinheit, die konfiguriert ist, um Verzögerungsinformationen über eine Verzögerungszeitspanne einer Ausgabezeit eines Betriebssignals für eine mit dem Ausgangsport verbundene Last, die das Befehlsziel des Befehlssignals ist, zu erfassen, wobei die Unterscheidungseinheit unterschieden hat, dass der eigene Ausgangsport als Befehlsziel angegeben ist, eine Bestimmungseinheit, die konfiguriert ist, um einen Zeitpunkt zu bestimmen, zu dem das Betriebssignal an die Last von dem eigenen Ausgangsport basierend auf einem Empfangszeitpunkt des Befehlssignals ausgegeben wird, wobei die Unterscheidungseinheit unterschieden hat, dass der eigene Ausgangsport als Befehlsziel vom Netzwerk, die von der angegebenen Zahlenerfassungseinheit erfasste angegebene Nummer und die von der Verzögerungsinformationserfassungseinheit erfasste Verzögerungsinformation angegeben ist, und eine Ausgabeeinheit, die konfiguriert ist, um das Betriebssignal an die Last von dem eigenen Ausgangsport zu dem von der Bestimmungseinheit bestimmten Zeitpunkt auszugeben.

Mit dem Netzwerkknoten gemäß dem ersten Aspekt der vorliegenden Anwendung, in einem Fall, in dem die Unterscheidungseinheit unterscheidet, dass ein eigener Ausgangsport als Befehlsziel in dem vom Netzwerk empfangenen Befehlssignal angegeben wird, erfasst die angegebene Nummernerfassungseinheit eine bestimmte Anzahl des eigenen Ausgangsports als Befehlsziel im empfangenen Befehlssignal.

Die Bestimmungseinheit bestimmt dann eine Zeitspanne, die vom Empfang des Befehlssignals zum Ausgeben eines Betriebssignals zu verzögern ist, d.h. ein Ausgabezeitpunkt des Betriebssignals basierend auf dem Empfangszeitpunkt des Befehlssignals aus dem Netzwerk, den von der Verzögerungsinformationserfassungseinheit erfassten Verzögerungsinformationen und der angegebenen Nummer des eigenen Ausgangsports als Befehlsziel, das von der angegebenen Zahlenerfassungseinheit erfasst wird.

Man beachte, dass die Bestimmungseinheit die zu verzögernde Zeitspanne ab dem Empfang des Befehlssignals zur Ausgabe eines Betriebssignals bestimmen kann, indem sie die Verzögerungszeitspanne eines Ausgabezeitpunkts eines Betriebssignals integriert, das basierend auf den Verzögerungsinformationen berechnet wird, die von der Verzögerungsinformationserfassungseinheit aus dem empfangenen Befehlssignal für die Anzahl der Male erfasst werden, die der angegebenen Anzahl der eigenen Ausgangsports als Befehlsziel entspricht, das von der angegebenen Zahlenerfassungseinheit erfasst wird.

Somit wird das Betriebssignal von dem eigenen Ausgangsport ausgegeben, der sich durch die Unterscheidungseinheit als Befehlsziel unterscheidet, das im empfangenen Befehlssignal an die Last zu dem von der Bestimmungseinheit bestimmten Zeitpunkt angegeben ist.

Wenn also eine Vielzahl von Ausgangsports als Befehlsziele in einem Befehlssignal angegeben sind, unterscheiden sich die Ausgangszeiten der von der Bestimmungseinheit bestimmten Betriebssignale entsprechend der Differenz in der Anzahl, die als Befehlsziel im empfangenen Befehlssignal angegeben ist.

Das heißt, mit nur einem Befehlssignal ist es möglich, die Betriebssignale nacheinander an die Lasten auszugeben, indem die Timings von der Vielzahl der Ausgangsports, die Befehlsziele sind, in der als Befehlsziele angegebenen Reihenfolge verzögert werden. Weiterhin können die Zeitunterschiede zwischen den Zeitpunkten, zu denen die Ausgangsports die Betriebssignale ausgeben, durch die Verzögerungszeitlängen bestimmt werden, die basierend auf den Verzögerungsinformationen des Befehlssignals unabhängig von der Kommunikationsgeschwindigkeit (Kommunikationskapazität) des Netzwerks berechnet werden.

Daher ist es auch bei Verwendung eines Netzwerks mit einer relativ niedrigen Kommunikationsgeschwindigkeit (Kommunikationskapazität) möglich, eine Netzwerkkommunikation zu realisieren, die in der Lage ist, ein Befehlssignal zum sequentiellen Betrieb der Vielzahl von Lasten mit einer kurzen Zeitdifferenz vom Knoten als Übertragungsquelle zu übertragen.

Die Angegebene-Zahlen-Erfassungseinheit kann aus dem Befehlssignal, das eine Vielzahl von Ausgangsports angegeben, einschließlich eines Ausgangsports eines anderen Netzwerkknotens als Befehlsziele, die angegebene Anzahl des eigenen Ausgangsports in der angegebenen Reihenfolge erfassen.

Bei dieser Konfiguration sind die angegebenen Nummern der Ausgangsports, die Befehlsziele im Befehlssignal sind, Seriennummern über alle als Befehlsziele angegebenen Ausgangsports, unabhängig davon, ob der gleiche Netzwerkknoten oder verschiedene Netzwerkknoten die Ausgangsports beinhalten.

Selbst wenn die als Befehlsziele im Befehlssignal angegebenen Ausgangsports einen Ausgangsport eines anderen Netzwerkknotens beinhalten, ist es daher möglich, die Betriebssignale nacheinander auszugeben, indem Zeitabläufe von der Vielzahl der Ausgangsports zu den Lasten verzögert werden.

Der Netzwerkknoten gemäß dem ersten Aspekt der vorliegenden Anwendung kann des Weiteren eine individuelle Informationserfassungseinheit beinhalten, die konfiguriert ist, um aus einem Verzögerungsinformationssignal, das Identifikationsinformationen der Verzögerungsinformationen in Header-Informationen aus Signalen, die vom Netzwerk empfangen werden, umfasst, individuelle Verzögerungsinformationen zu erfassen, die als Verzögerungszeitlängen Unterschiede zwischen den Ausgabezeiten von Betriebssignalen von zwei Ausgangsports definieren, die nacheinander aus einer Vielzahl von Ausgangsports, die als Befehlsziele im Befehlssignal in der angegebenen Reihenfolge der Befehlsziele angegeben sind, angegeben sind. In diesem Fall verwendet die Unterscheidungseinheit ein Signal, das Identifikationsinformationen des Befehlssignals in den nach dem Verzögerungsinformationssignal vom Netzwerk empfangenen Header-Informationen umfasst, um zu unterscheiden, ob der eigene Ausgangsport als Befehlsziel im Befehlssignal angegeben ist oder nicht, und in einem Fall, in dem die Verzögerungsinformationen, die von der Verzögerungsinformationserfassungseinheit aus dem Befehlssignal erfasst wurden, eine Referenz der einzelnen Verzögerungsinformationen anzeigen, die Bestimmungseinheit einen Zeitpunkt bestimmt, zu dem das Betriebssignal an die Last von dem eigenen Ausgangsport ausgegeben wird, wobei sie als die von der Verzögerungsinformationserfassungseinheit erfassten Verzögerungsinformationen Unterschiede zwischen den Ausgangszeiten der an bestimmten Nummern definierten Betriebssignale verwendet, die früher verglichen werden mit der von der Angegebene-Zahlen-Erfassungseinheit in den einzelnen Verzögerungsinformationen, die von der einzelnen Informationserfassungseinheit erfasst werden, von dem Verzögerungsinformationssignal, das vor dem Befehlssignal vom Netzwerk empfangen wurde.

Bei dieser Konfiguration, wenn ein Verzögerungsinformationssignal mit Identifikationsinformationen von Verzögerungsinformationen in den Header-Informationen vom Netzwerk empfangen wird, werden die einzelnen Verzögerungsinformationen von der einzelnen Informationserfassungseinheit aus dem Verzögerungsinformationssignal erfasst.

Individuelle Verzögerungsinformationen, die von der individuellen Informationserfassungseinheit aus dem Verzögerungsinformationssignal erfasst werden, definieren als Verzögerungszeitlängen Unterschiede zwischen den Ausgabezeiten von Betriebssignalen von zwei nacheinander angegebenen Ausgangsports aus einer Vielzahl von Ausgangsports, die als Befehlsziele im Befehlssignal angegeben sind. In den einzelnen Verzögerungsinformationen werden die Unterschiede zwischen den Ausgabezeiten von Betriebssignalen von zwei nacheinander angegebenen Ausgangsports in der angegebenen Reihenfolge der Befehlsziele im Befehlssignal definiert.

Wenn ein Befehlssignal mit Identifikationsinformationen des Befehlssignals in den Header-Informationen vom Netzwerk nach dem Verzögerungsinformationssignal empfangen wird, wird durch die Unterscheidungseinheit unterschieden, ob der eigene Ausgangsport als Befehlsziel im Befehlssignal angegeben ist oder nicht. In einem Fall, in dem die Unterscheidungseinheit unterscheidet, dass ein eigener Ausgangsport als Befehlsziel in dem vom Netzwerk empfangenen Befehlssignal angegeben wird, erfasst die Angegebene-Zahlen-Erfassungseinheit eine bestimmte Anzahl des eigenen Ausgangsports als Befehlsziel im empfangenen Befehlssignal, und die Verzögerungsinformationserfassungseinheit erfasst Verzögerungsinformationen aus dem empfangenen Befehlssignal.

Wenn sich die vom empfangenen Befehlssignal durch die Verzögerungsinformationserfassungseinheit erfassten Verzögerungsinformationen auf die Verzögerungszeitspanne der Ausgabezeit des Betriebssignals an die an den Ausgangsport angeschlossene Last beziehen, die ein Befehlsziel ist, bestimmt die Bestimmungseinheit eine zu verzögernde Zeitspanne ab dem Empfang des Befehlssignals, um das Betriebssignal basierend auf den vom empfangenen Befehlssignal durch die Verzögerungsinformationserfassungseinheit erfassten Verzögerungsinformationen und der angegebenen Anzahl des eigenen Ausgangsports als Befehlsziel auszugeben.

Wenn andererseits die vom empfangenen Befehlssignal durch die Verzögerungsinformationserfassungseinheit erfasste Verzögerungsinformation eine Referenz der einzelnen Verzögerungsinformationen des Verzögerungsinformationssignals anzeigt, bestimmt die Bestimmungseinheit eine zu verzögernde Zeitspanne ab dem Empfang des Befehlssignals, um das Betriebssignal basierend auf den einzelnen Verzögerungsinformationen auszugeben, die von der einzelnen Informationserfassungseinheit aus dem Verzögerungsinformationssignal erfasst wurden, das vom Netzwerk vor dem Befehlssignal und der angegebenen Anzahl des eigenen Ausgangsports als Befehlsziel empfangen wurde, das von der Angegebene-Zahlen-Erfassungseinheit erfasst wurde.

Man beachte, dass die Bestimmungseinheit eine Zeitspanne aus dem Empfangszeitpunkt des Befehlssignals zu einem Zeitpunkt bestimmt, zu dem das Betriebssignal an die Last vom eigenen Ausgangsport ausgegeben wird, wobei als Verzögerungsinformationen, die von der Verzögerungsinformationserfassungseinheit erfasst werden, Unterschiede der Ausgangszeiten der zwischen zwei Ausgangsports definierten Betriebssignale bei aufeinanderfolgenden vorgegebenen Zahlen verwendet werden, die früherer sind als die von der bestimmten Zahlenerfassungseinheit in den einzelnen Verzögerungsinformationen, die von der einzelnen Informationserfassungseinheit erfasst werden, von dem Verzögerungsinformationssignal, das vor dem Befehlssignal vom Netzwerk empfangen wurde.

Das heißt, die Bestimmungseinheit bestimmt einen Zeitpunkt, zu dem das Betriebssignal von dem eigenen Ausgangsport an die Last ausgegeben wird, indem sie Unterschiede der Ausgabe-Timings der zwischen zwei Ausgangsports definierten Betriebssignale zu aufeinanderfolgenden vorgegebenen Nummern integriert, die früher mit der von der Angegebene-Zahlen-Erfassungseinheit erfassten vorgegebenen Nummer verglichen werden, in den einzelnen Verzögerungsinformationen, die von der einzelnen Informationserfassungseinheit vom empfangenen Verzögerungsinformationssignal erfasst werden.

Daher kann der Ausgabezeitpunkt des Betriebssignals an eine Last von einem als Befehlsziel im empfangenen Befehlssignal angegebenen Ausgangsport durch individuelles Einstellen einer Verzögerungszeitspanne von einem Ausgabezeitpunkt eines Betriebssignals von einem zuvor als Befehlsziel angegebenen Ausgangsport an eine Last eingestellt werden, anstatt konstante Verzögerungszeitlängen einzustellen.

Ein Netzwerkkommunikationssystem gemäß einem zweiten Aspekt der vorliegenden Anwendung umfasst einen Masterknoten, der konfiguriert ist, um als Befehlsziele Ausgangsports zum Ausgeben von Betriebssignalen an Lasten zu unterschiedlichen Zeiten in einer Reihenfolge von einem Ausgangsport mit einem früheren Ausgabezeitpunkt eines Betriebssignals zu spezifizieren und ein Befehlssignal an ein Netzwerk zu übertragen, wobei das Befehlssignal Verzögerungsinformationen bezüglich der Verzögerungszeitlängen von Ausgabezeiten der Betriebssignale an die mit den Ausgangsports verbundenen Lasten, die die Befehlsziele von den Ausgangsports sind, und einen Slave-Knoten umfasst, der konfiguriert ist, um das Befehlssignal vom Netzwerk zu empfangen, wobei der Netzwerkknoten gemäß dem ersten Aspekt der vorliegenden Anwendung als Slave-Knoten verwendet wird.

Mit dem Netzwerkkommunikationssystem gemäß dem zweiten Aspekt der vorliegenden Anwendung wird der Netzwerkknoten gemäß dem ersten Aspekt der vorliegenden Anwendung als Slave-Knoten verwendet, der aus dem Netzwerk das vom Master-Knoten übertragene Befehlssignal empfängt und somit die vom Netzwerkknoten gemäß dem ersten Aspekt der vorliegenden Anwendung erhaltene Wirkung erhalten kann.

Ein Netzwerkkommunikationsverfahren gemäß einem dritten Aspekt der vorliegenden Anwendung umfasst einen Übertragungsschritt, der von einem Masterknoten durchgeführt wird, um ein Befehlssignal an ein Netzwerk zu übertragen, wobei das Befehlssignal in einem Frame ein Befehlszielfeld umfasst, in dem Ausgangsports zum Ausgeben von Betriebssignalen an Lasten zu unterschiedlichen Zeitpunkten als Befehlsziele in einer Reihenfolge von einem Ausgangsport mit einem früheren Ausgabezeitpunkt eines Betriebssignals und einem Verzögerungsinformationsfeld angegeben werden, in dem Verzögerungsinformationen in Bezug auf Verzögerungszeitlängen von Ausgabezeiten der Betriebssignale an die Lasten, die mit den Ausgangsports verbunden sind, die Befehlsziele von den Ausgangsports sind, eingestellt werden, einen Unterscheidungsschritt, der von einem Slave-Knoten durchgeführt wird, um zu unterscheiden, ob ein eigener Ausgangsport als eines der Befehlsziele im Befehlszielfeld des von einem Netzwerk empfangenen Befehlssignals angegeben ist oder nicht, einen bestimmten Zahlenerfassungsschritt, der von dem Slave-Knoten ausgeführt wird, um eine bestimmte Anzahl in einer bestimmten Reihenfolge des eigenen Ausgangsports im Befehlszielfeld des Befehlssignals zu erfassen, wobei der eigene Ausgangsport im Unterscheidungsschritt als Ausgangsport unterschieden wurde, der als eines der Befehlsziele im Befehlszielfeld des Befehlssignals angegeben ist, einen Verzögerungsinformationserfassungsschritt, der vom Slave-Knoten durchgeführt wird, um die Verzögerungsinformationen aus dem Verzögerungsinformationsfeld des Befehlssignals zu erfassen, für das im Unterscheidungsschritt unterschieden wurde, dass der eigene Ausgangsport als eines der Befehlsziele angegeben ist, einen Bestimmungsschritt, der vom Slave-Knoten ausgeführt wird, Bestimmen eines Zeitpunkts für die Ausgabe des Betriebssignals an die Last von dem eigenen Ausgangsport basierend auf dem Empfangszeitpunkt des Befehlssignals, für das in dem Unterscheidungsschritt unterschieden wurde, dass der eigene Ausgangsport als eines der Befehlsziele angegeben wird, die angegebene Anzahl, die in dem angegebenen Zahlenerfassungsschritt erworben wurde, und die Verzögerungsinformationen, die in dem Verzögerungsinformationserfassungsschritt erfasst wurden, und ein Ausgabeschritt, der vom Slave-Knoten ausgeführt wird, um das Betriebssignal an die Last von dem eigenen Ausgangsport zu dem im Bestimmungsschritt bestimmten Zeitpunkt auszugeben.

Gemäß dem Netzwerkkommunikationsverfahren gemäß dem dritten Aspekt der vorliegenden Anwendung, wenn der Master-Knoten als Befehlsziele Ausgangsports angibt, um Betriebssignale an Lasten zu unterschiedlichen Zeitpunkten in einer Reihenfolge von einem Ausgangsport mit einem früheren Ausgangszeitpunkt eines Betriebssignals in einem Befehlszielfeld auszugeben und ein Befehlssignal an ein Netzwerk zu übertragen, das Befehlssignal Verzögerungsinformationen bezüglich der Verzögerungszeitlängen von Ausgabezeiten der Betriebssignale umfasst, die in einem Verzögerungsinformationsfeld zu den Lasten eingestellt sind, die mit den Ausgangsports verbunden sind, die die Befehlsziele von den Ausgangsports sind, wobei der Slave-Knoten die Schritte ähnlich den Schritten des Verfahrens durchführt, das vom Netzwerkknoten gemäß dem ersten Aspekt der vorliegenden Anwendung durchgeführt wird.

Daher ist es ähnlich wie beim ersten Aspekt der vorliegenden Anwendung, auch wenn ein Netzwerk mit einer relativ niedrigen Kommunikationsgeschwindigkeit (Kommunikationskapazität) verwendet wird, möglich, eine Netzwerkkommunikation zu realisieren, die in der Lage ist, ein Befehlssignal zum sequentiellen Betrieb der Vielzahl von Lasten mit einer kurzen Zeitdifferenz vom Knoten als Übertragungsquelle zu übertragen.

Gemäß jedem Aspekt der vorliegenden Anwendung ist es auch bei Verwendung eines Netzwerks mit einer relativ niedrigen Kommunikationsgeschwindigkeit (Kommunikationskapazität) möglich, eine Netzwerkkommunikation zu realisieren, die in der Lage ist, ein Befehlssignal zum sequentiellen Betrieb der Vielzahl von Lasten mit einer kurzen Zeitdifferenz vom Knoten als Übertragungsquelle zu übertragen.

### KURZE BESCHREIBUNG DER ZEICHNUNGEN

FIG. 1 ist ein erläuterndes Diagramm, das eine schematische Konfiguration eines fahrzeuginternen LAN-Systems veranschaulicht, das ein Netzwerkkommunikationssystem gemäß einer Ausführungsform ist.
FIG. 2 ist ein erläuterndes Diagramm, das einen Zustand veranschaulicht, in dem jede Slave-Einheit von FIG. 1 ein Betriebssignal an eine an jeden Port angeschlossene Last ausgibt, die einem Steuersignal von einer Master-Einheit entspricht.
FIG. 3A ist ein erläuterndes Diagramm einer Frame-Struktur eines von der Master-Einheit von FIG. 1 an einen CXPI-Bus übertragenen Befehlssignals, und FIG. 3B ist ein erläuterndes Diagramm einer Frame-Struktur eines von der Master-Einheit von FIG. 1 an den CXPI-Bus übertragenen Verzögerungsinformationssignals.
FIG. 4 ist ein Flussdiagramm, das ein Verarbeitungsverfahren zur Ausgabe eines Betriebssignals an die von einer CPU eines Mikrocomputers ausgeführte Last jeder Slave-Einheit von FIG. 1 gemäß einem in einem ROM gespeicherten Programm veranschaulicht.
FIG. 5 ist ein Flussdiagramm, das ein Verarbeitungsverfahren zum Ausgeben eines Betriebssignals an die von der CPU des Mikrocomputers ausgeführte Last jeder Slave-Einheit von FIG. 1 gemäß einem im ROM gespeicherten Programm veranschaulicht.
FIG. 6 ist ein Flussdiagramm, das ein Verfahren eines Netzwerkkommunikationsverfahrens veranschaulicht, das durchgeführt wird, wenn eine Vielzahl von Lasten im fahrzeuginternen LAN-System von FIG. 1 nacheinander eingeschaltet wird.
FIG. 7 ist ein Zeitdiagramm, das die Variation der Potentiale der Ports veranschaulicht, wenn die CPU des Mikrocomputers jeder Slave-Einheit von FIG. 1, die das Steuersignal von FIG. 3A empfangen hat, die Betriebssignale von den Ports in konstanten Abständen ausgibt.

### AUSFÜHRLICHE BESCHREIBUNG

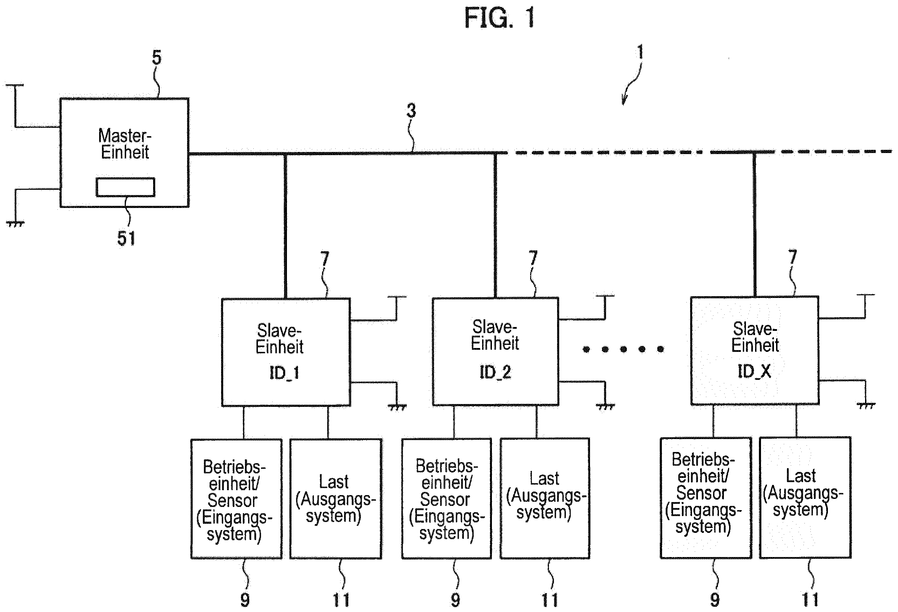

Im Folgenden wird eine Ausführungsform mit Bezug auf die Zeichnungen beschrieben. FIG. 1 ist ein erläuterndes Diagramm, das eine schematische Konfiguration eines fahrzeuginternen LAN-Systems 1 veranschaulicht, das gemäß der Ausführungsform ein Netzwerkkommunikationssystem ist.

Das fahrzeuginterne LAN-System 1 ist ein LAN-System, das dem Clock-Extension-Peripheral-Interface- (CXPI-) Standard entspricht. Das fahrzeuginterne LAN-System 1 ist als untergeordnetes Netzwerk eines übergeordneten LAN-Systems nach dem Standard Controller-Area-Network (CAN) (nicht dargestellt) zusammen mit dem LAN-System nach dem CAN-Standard an einem Fahrzeug montiert.

Das dem CAN-Standard entsprechende übergeordnete LAN-System wird hauptsächlich für die Kommunikation von Signalen wie z.B. einem Erkennungssignal einer Betriebseinheit in Bezug auf ein Fahrsystem mit Maschine, Motor und dergleichen verwendet, das ein Kern eines Fahrzeugs, ein Steuersignal einer Last und dergleichen ist. Andererseits wird das fahrzeuginterne LAN-System 1, das das untergeordnete LAN-System nach dem CXPI-Standard ist, zur Kommunikation von Signalen wie beispielsweise einem Erkennungssignal einer Bedieneinheit in Bezug auf ein Gerätesystem (Wischer, Licht) verwendet, das direkt über einen Kabelbaum, ein Steuersignal einer Last und dergleichen verbunden ist (Direktverbindung).

Das in FIG. 1 dargestellte fahrzeuginterne LAN-System 1 umfasst als Netzwerk einen CXPI-Bus 3 nach dem CXPI-Standard. An den CXPI-Bus 3 sind eine Mastereinheit 5 als Masterknoten und eine Vielzahl von Slave-Einheiten 7 als Slave-Knoten angeschlossen.

Die Master-Einheit 5 ist ebenfalls an ein Netzwerk (nicht dargestellt) des LAN-Systems nach dem CAN-Standard angeschlossen, das auf einem höheren Niveau liegt als das fahrzeuginterne LAN-System 1. Die Master-Einheit 5 umfasst eine Steuerung 51, die als CAN-Steuerung fungiert. Die Steuerung 51 sendet ein Steuersignal, um jede der Slave-Einheiten 7 anzuweisen, ein Betriebssignal zum Betreiben einer Last des Gerätesystems und dergleichen an den an die Slave-Einheit 7 gerichteten CXPI-Bus 3 auszugeben.

Jede der Slave-Einheiten 7 umfasst einen Mikrocomputer 71 und eine Ein-/Ausgangs-(I/O)-Schnittstelle 73. Der Mikrocomputer 71 empfängt ein auf den CXPI-Bus 3 übertragenes Signal und führt eine dem Inhalt des Signals entsprechende Verarbeitung durch. Die Ein-/Ausgabeschnittstelle 73 weist eine Vielzahl von Ports auf. An jeden der Anschlüsse sind eine Betriebseinheit/Sensor (Eingangssystem) 9 und eine Last (Ausgangssystem) 11 des Gerätesystems angeschlossen, die in der Nähe jeder der Slave-Einheiten 7 angeordnet sind.

Beim Betrieb der an jede der Slave-Einheiten 7 angeschlossenen Last 11 sendet die Steuerung 51 der Master-Einheit 5 ein Signal an den CXPI-Bus 3.

Andererseits empfängt der Mikrocomputer 71 jeder der Slave-Einheiten 7 ein Signal, das von der Steuerung 51 der Master-Einheit 5 von FIG. 1 vom CXPI-Bus 3 auf den CXPI-Bus 3 übertragen wurde. Darüber hinaus gibt der Mikrocomputer 71 jeder der Slave-Einheiten 7 ein Betriebssignal an die Last 11 aus, die mit jedem der Ports (Ausgangsports) 74-79 der Ein-/Ausgangsschnittstellen 73 verbunden ist, die dem Inhalt des vom CXPI-Bus 3 empfangenen Signals entsprechen.

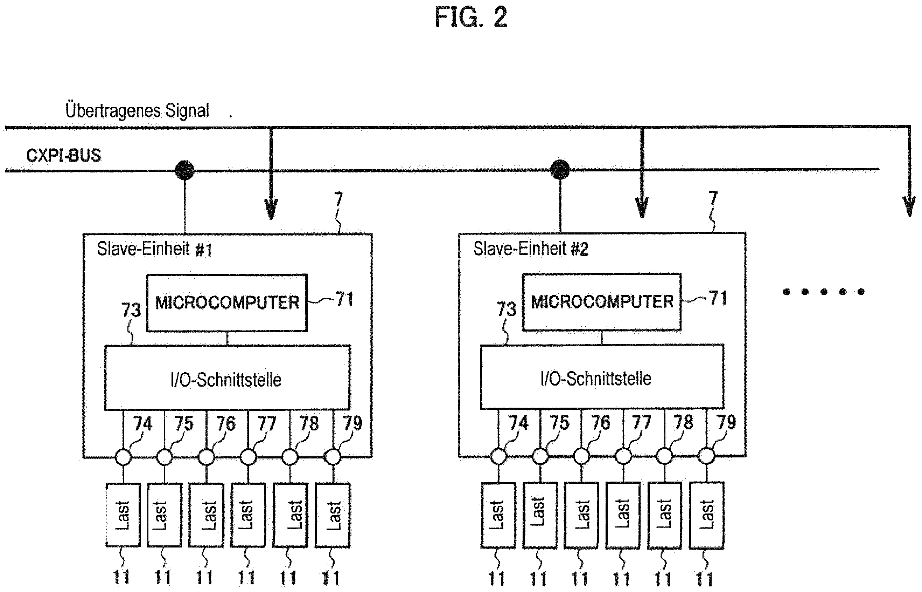

Fig. 2 ist ein erläuterndes Diagramm, das einen Zustand veranschaulicht, in dem der Mikrocomputer 71 jeder der Slave-Einheiten 7 ein Betriebssignal an die Last 11 ausgibt, die an jeden der Anschlüsse 74-79 der Ein-/Ausgangsschnittstelle 73 angeschlossen ist, je nach Bedarf entsprechend einem Signal der Master-Einheit 5.

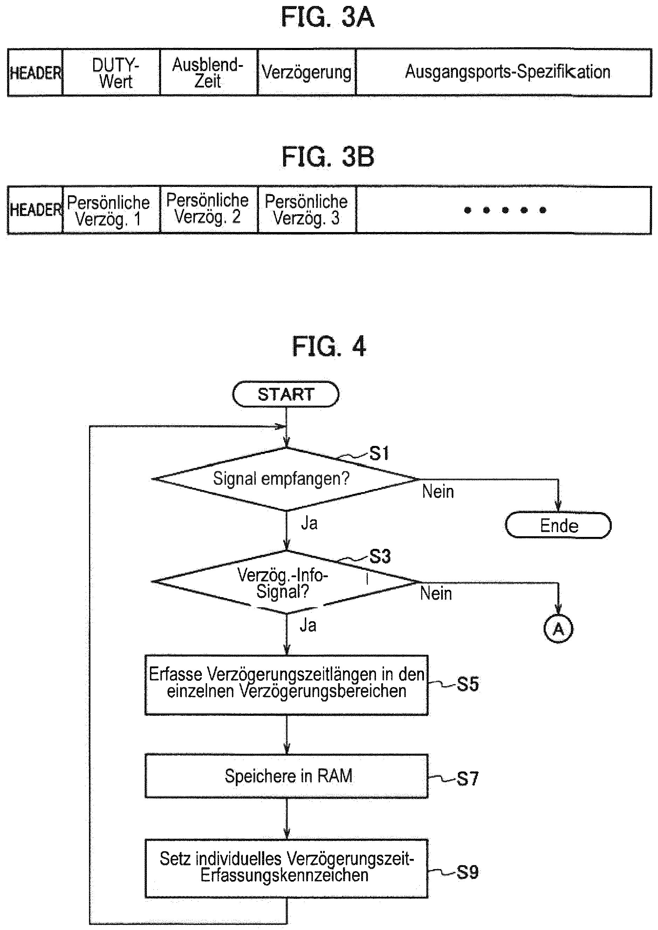

Hier wird eine Frame-Struktur eines von der Steuerung 51 der Master-Einheit 5 an den CXPI-Bus 3 übertragenen Signals mit Bezug auf die FIGS. 3A und 3B beschrieben.

In der folgenden Beschreibung wird davon ausgegangen, dass die Last 11 eine Beleuchtungslichtquelle zur Beleuchtung des Fahrzeuginnenraums ist, und der Mikrocomputer 71 gibt Betriebssignale an die einzuschaltenden Lasten 11 aus, um die Vielzahl der Lasten 11 einzuschalten. Darüber hinaus wird in der folgenden Beschreibung davon ausgegangen, dass die Vielzahl der Lasten 11 zu unterschiedlichen Zeiten mit einer Zeitdifferenz dazwischen eingeschaltet wird.

Zunächst ist FIG. 3A ein erläuterndes Diagramm, das eine Frame-Struktur eines Befehlssignals veranschaulicht, das von der Steuerung 51 der Mastereinheit 5 an den CXPI-Bus 3 übertragen wird. Das Steuersignal ist ein Signal, das vom Mikrocomputer 71 jeder der Slave-Einheiten 7 übertragen wird, um den Mikrocomputer 71 anzuweisen, Betriebssignale zum Einschalten der mit der Slave-Einheit 7 verbundenen Lasten 11 an die Lasten 11 auszugeben.

Wie in FIG. 3A dargestellt, weist der Frame des Befehlssignals einen Header-Bereich, einen DUTY-Wertbereich, einen Überblendzeitbereich, einen Verzögerungsbereich und einen Spezifikationsbereich des Ausgangsports auf.

Der Header-Bereich dient zum Einstellen der Identifikationsinformationen des Befehlssignals. Im DUTY-Wertbereich wird ein Wert für das Tastverhältnis entsprechend der Helligkeit beim Einschalten der Last 11 eingestellt. Der Überblendzeitbereich wird verwendet, um eine Überblendzeit einzustellen, die für den Übergang vom Abschaltzustand zum Einschaltzustand beim Einschalten der Last 11 benötigt wird. Der Verzögerungsbereich wird später beschrieben.

Der Ausgangsportspezifikationsbereich wird verwendet, um die Ports 74-79 als Befehlsziele der Ein-/Ausgabeschnittstelle 73 festzulegen. An die Ports 74-79 sind die Lasten 11 angeschlossen, an die Betriebssignale ausgegeben werden.

Im fahrzeuginternen LAN-System 1 ist gemäß der Ausführungsform die Vielzahl der Slave-Einheiten 7 mit dem CXPI-Bus 3 verbunden. Daher ist es notwendig, jede der Slave-Einheiten 7 zu unterscheiden und jeden der Ports 74-79 anzugeben. Daher werden in der Ausführungsform Identifikationsnummern, die Seriennummern sind, die den Ports 74-79 der Ein-/Ausgabeschnittstellen 73 aller am CXPI-Bus 3 angeschlossenen Slave-Einheiten 7 zugeordnet sind, verwendet, um einen Port 74-79 einer beliebigen der Slave-Einheiten 7 als Befehlsziel anzugeben.

Im Bereich der Ausgangsportspezifikation werden die Ports 74-79 der Slave-Einheiten 7, die Befehlsziele sind, in einer Reihenfolge von einem Port angegeben, um die Last 11 zum frühestmöglichen Zeitpunkt einzuschalten.

Der Verzögerungsbereich dient zum Festlegen einer Differenz (Verzögerungszeitspanne) zwischen den Ausgabezeiten der von zwei der Ports 74-79 der Slave-Einheit 7 auszugebenden Betriebssignale, die nacheinander angegebene Befehlsziele sind, wenn Betriebssignale für die Lasten 11 nacheinander von den Ports 74-79 der Slave-Einheiten 7 in der als Befehlsziele im Bereich der Ausgangsportspezifikation angegebenen Reihenfolge ausgegeben werden.

Wenn beispielsweise ein bestimmter Wert im Verzögerungsbereich "100" ist, werden 100ms als Verzögerungszeitdauer angegeben. Wenn ein bestimmter Wert im Verzögerungsbereich "0" ist, bedeutet dies, dass Zeitlängen, die für die Befehlsziele in der angegebenen Reihenfolge in einem nachfolgend zu beschreibenden Verzögerungsinformationssignal individuell festgelegt sind, als Verzögerungszeitlängen angegeben werden.

Als nächstes ist FIG. 3B ein erläuterndes Diagramm, das eine Frame-Struktur des Verzögerungsinformationssignals veranschaulicht, das von der Steuerung 51 der Mastereinheit 5 bei Bedarf an den CXPI-Bus 3 übertragen wird. Das Verzögerungsinformationssignal ist ein Signal zum Spezifizieren von Unterschieden (Verzögerungszeitlängen) zwischen den Ausgabezeitpunkten von Betriebssignalen, die von zwei der Ports 74-79 der Slave-Einheit 7 ausgegeben werden sollen, die Befehlsziele sind, die nacheinander in weiteren Details angegeben werden, als dies im Verzögerungsbereich des Befehlssignals von FIG. 3A angegeben werden kann, wenn Betriebssignale für die Lasten 11 nacheinander von den Ports 74-79 der Slave-Einheiten 7 in der als Befehlsziele im Befehlssignal angegebenen Reihenfolge ausgegeben werden.

Wie in FIG. 3B dargestellt, umfasst der Frame des Verzögerungsinformationssignals einen Header-Bereich und eine Vielzahl von einzelnen Verzögerungsbereichen. Der Header-Bereich dient zum Einstellen der Identifikationsinformationen des Verzögerungsinformationssignals.

Der individuelle Verzögerungsbereich dient zum individuellen Festlegen einer Differenz (Verzögerungszeitspanne) zwischen den Ausgabezeiten der von zwei der Ports 74-79 der Slave-Einheit 7 auszugebenden Betriebssignale, die nacheinander für jedes Paare von Ports angegebene Befehlsziele sind, wenn von den Ports 74-79 der Slave-Einheiten 7 nacheinander Betriebssignale für die Lasten 11 in der als Befehlsziele im Befehlssignal von FIG. 3A angegebenen Reihenfolge ausgegeben werden.

Daher ist die Anzahl der einzelnen Verzögerungsbereiche, die im Verzögerungsinformationssignal enthalten sind, um eins geringer (n - 1) als die Anzahl (n) der Ports 74-79 der Slave-Einheit 7, die Befehlsziele sind.

So wird beispielsweise im ersten einzelnen Verzögerungsbereich eine Zeitdifferenz (Verzögerungszeitspanne) zwischen den Ausgabezeiten von Betriebssignalen für die Lasten 11, die von zwei der Ports 74-79 der Slave-Einheit 7 ausgegeben werden sollen, die Befehlsziele sind, die zuerst und dann als Befehlsziele angegeben sind. Weiterhin wird im (n-1)-ten individuellen Verzögerungsbereich eine Zeitdifferenz (Verzögerungszeitspanne) zwischen den Ausgabezeiten von Betriebssignalen für die Lasten 11, die von zwei der Ports 74-79 der Slave-Einheit 7 ausgegeben werden sollen, die Befehlsziele sind, die als Befehlsziele (n-1)-ten und n-ten angegeben sind.

Genauer gesagt, in einem Fall, in dem z.B. die Zeitunterschiede beim sequentiellen Einschalten der Lasten 11 allmählich verringert werden, werden die in den einzelnen Verzögerungsbereichen angegebenen Verzögerungszeitlängen schrittweise vom ersten Verzögerungsbereich zum letzten Verzögerungsbereich verringert. Im Gegenteil, in einem Fall, in dem beispielsweise die Zeitdifferenzen beim sequentiellen Einschalten der Lasten 11 allmählich erhöht werden, werden die in den einzelnen Verzögerungsbereichen angegebenen Verzögerungszeitlängen schrittweise vom ersten Verzögerungsbereich zum letzten Verzögerungsbereich erhöht.

In einem Fall, in dem die Vielzahl der Lasten 11 in konstanten Abständen, d.h. einer Verzögerungszeitspanne, sequentiell eingeschaltet wird, sendet die Steuerung 51 der Master-Einheit 5 nur das Steuersignal mit einem anderen Wert als "0" als dem angegebenen Wert im Verzögerungsbereich von FIG. 3A an den CXPI-Bus 3.

In einem Fall, in dem die Vielzahl von Lasten 11 sequentiell mit individueller Angabe von Zeitdifferenzen (Verzögerungszeitlängen) zwischen den Einschaltzeiten von zwei der nacheinander einzuschaltenden Lasten 11 eingeschaltet wird, sendet die Steuerung 51 der Master-Einheit 5 das Steuersignal mit einem Wert "0" als Sollwert im Verzögerungsbereich von FIG. 3A an den CXPI-Bus 3. Zusätzlich überträgt die Steuerung 51 der Master-Einheit 5 das Verzögerungsinformationssignal von FIG. 3B mit den einzelnen Verzögerungsbereichen, deren Anzahl um eins kleiner ist als die Anzahl der nacheinander einzuschaltenden Lasten 11, an den CXPI-Bus 3, bevor sie das Befehlssignal sendet.

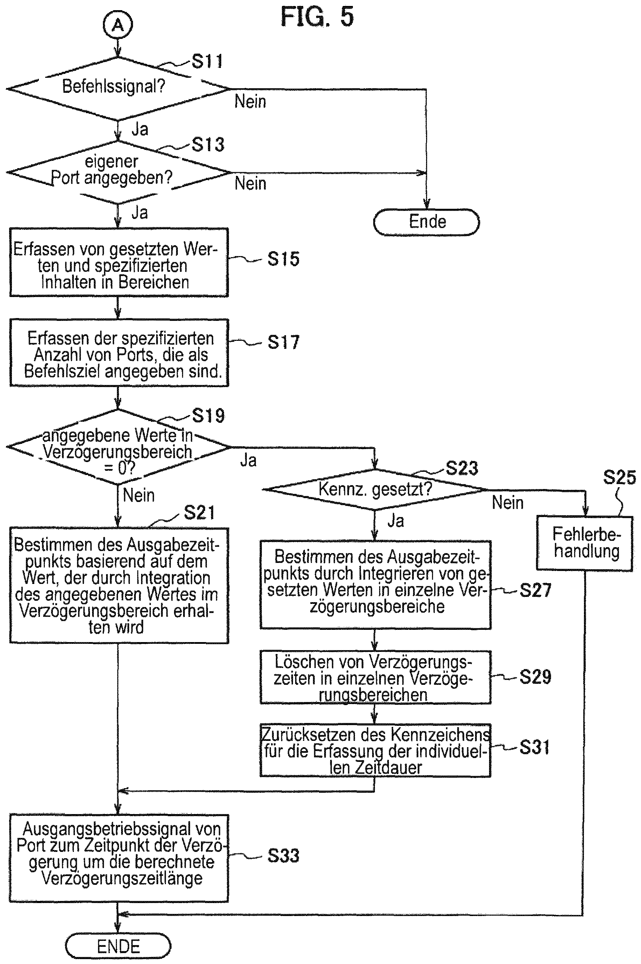

Anschließend wird unter Bezugnahme auf ein Flussdiagramm der FIGS. 4 und 5 das Verfahren der Verarbeitung zur Ausgabe der Betriebssignale an die Lasten 11 beschrieben, das von einer CPU des Mikrocomputers 71 gemäß einem in einem ROM des Mikrocomputers 71 in jeder Slave-Einheit 7 des fahrzeuginternen LAN-Systems 1 gespeicherten Programm durchgeführt wird. Die CPU des Mikrocomputers 71 wiederholt die Verarbeitung des im Flussdiagramm der FIGS. 4 und 5 dargestellten Verfahrens in vorgegebenen Abständen.

Zunächst prüft die CPU des Mikrocomputers 71, wie in FIG. 4 dargestellt, ob ein Signal vom CXPI-Bus 3 empfangen wird oder nicht (Schritt S1). Wenn die CPU kein Signal empfangen hat (NEIN in Schritt S1), wird die Verarbeitungsreihe beendet.

Wenn die CPU hingegen ein Signal empfangen hat (JA in Schritt S1), prüft die CPU, ob das empfangene Signal ein Verzögerungsinformationssignal ist oder nicht (Schritt S3). Die Tatsache, dass das Empfangssignal ein Verzögerungsinformationssignal ist, kann durch Bezugnahme auf die Identifikationsinformationen im Header-Bereich des Empfangssignals bestätigt werden.

Wenn das empfangene Signal kein Verzögerungsinformationssignal ist (NEIN in Schritt S3), fährt die Verarbeitung mit dem später beschriebenen Schritt S11 fort. Wenn das empfangene Signal ein Verzögerungsinformationssignal ist (JA in Schritt S3), erfasst die CPU Verzögerungszeitlängen, die in den einzelnen Verzögerungsbereichen des empfangenen Verzögerungsinformationssignals (Schritt S5) angegeben sind.

Die CPU speichert die erfassten Verzögerungszeitlängen im RAM des Mikrocomputers 71 (Schritt S7) und setzt ein individuelles Verzögerungszeit-Erfassungskennzeichen im RAM (Schritt S9), und die Verarbeitung kehrt dann zu Schritt S1 zurück.

Wie in FIG. 5 dargestellt, prüft die CPU des Mikrorechners 71 in Schritt S11, ob das empfangene Signal ein Befehlssignal ist oder nicht. Die Tatsache, dass das empfangene Signal ein Befehlssignal ist, kann durch Bezugnahme auf die Identifikationsinformationen im Header-Bereich des empfangenen Signals bestätigt werden.

Wenn das empfangene Signal kein Befehlssignal ist (NEIN in Schritt S11), wird die Verarbeitungsreihe beendet. Wenn das empfangene Signal ein Befehlssignal ist (JA in Schritt S11), prüft die CPU, ob das im Ausgangsportspezifikationsbereich des empfangenen Befehlssignals angegebene Befehlsziel eine Identifikationsnummer eines der Ports 74-79 der Ein-/Ausgabeschnittstelle 73 der eigenen Slave-Einheit 7, die den Mikrocomputer 71 umfasst, umfasst oder nicht (Schritt S13).

Wenn das Befehlsziel keine Identifikationsnummer eines der Ports 74-79 der eigenen Slave-Einheit 7 (NEIN in Schritt S13) umfasst, wird die Verarbeitungsserie beendet, und wenn das Befehlsziel eine Identifikationsnummer eines der Ports 74-79 der eigenen Slave-Einheit 7 (in Schritt S13 JA) umfasst, erfasst die CPU aus dem empfangenen Befehlssignal Sollwerte im DUTY-Wertbereich und im Überblendzeitbereich, einen bestimmten Wert im Verzögerungsbereich und einen bestimmten Inhalt im Ausgangsbereich-Angabebereich (Schritt S15).

Die CPU erfasst dann aus dem angegebenen Inhalt im Ausgangsportspezifikationsbereich eine angegebene Nummer des Ports 74-79 der eigenen Slave-Einheit 7, die als Befehlsziel in der angegebenen Reihenfolge angegeben ist (Schritt S17). Wenn zu diesem Zeitpunkt eine Vielzahl von Ports 74-79 der eigenen Slave-Einheit 7 als Befehlsziele angegeben sind, wird eine bestimmte Anzahl von jedem der angegebenen Ports 74-79 in der angegebenen Reihenfolge erfasst.

Anschließend prüft die CPU, ob der angegebene Wert im Verzögerungsbereich, der vom empfangenen Befehlssignal erfasst wird, "0" ist oder nicht (Schritt S19).

Wenn der angegebene Wert im Verzögerungsbereich nicht "0" ist (NEIN in Schritt S19), berechnet die CPU des Mikrorechners 71 einen Ausgabezeitpunkt eines Betriebssignals von dem im Befehlssignal als Befehlsziel angegebenen Port 74-79, indem sie 1 von der angegebenen Anzahl des als Befehlsziel angegebenen Ports 74-79 subtrahiert und den durch die Subtraktion erhaltenen Wert mit dem angegebenen Wert im vom Befehlssignal erfassten Verzögerungsbereich (Schritt S21) multipliziert. Die Verarbeitung fährt dann mit dem später beschriebenen Schritt S33 fort.

Ist dagegen der angegebene Wert im Verzögerungsbereich "0" (JA in Schritt S19), prüft die CPU, ob das individuelle Kennzeichen zur Erfassung der Verzögerungszeit im RAM gesetzt ist oder nicht (Schritt S23).

Wenn das individuelle Erfassungskennzeichen für die Verzögerungszeit nicht gesetzt ist (NEIN in Schritt S23), wird die Fehlerbehandlung, wie z.B. die Wiederholungsanforderung des Verzögerungsinformationssignals und des Befehlssignals (Schritt S25) durchgeführt und die Verarbeitungsreihe beendet.

Wenn dagegen das individuelle Erfassungskennzeichen für die Verzögerungszeit (JA in Schritt S23) gesetzt ist, berechnet die CPU des Mikrocomputers 71 eine Verzögerungszeitdauer von jedem der als Befehlsziele angegebenen Ports 74-79 unter Verwendung der Verzögerungszeitlängen zwischen zwei aufeinanderfolgenden Ports der Ports 74-79, die in den einzelnen Verzögerungsbereichen des Verzögerungsinformationssignals angegeben sind, das im RAM gespeichert ist (Schritt S27).

Genauer gesagt, erfasst die CPU die im Verzögerungsinformationssignal angegebenen Verzögerungszeitlängen aus den Verzögerungszeitlängen der einzelnen Verzögerungsbereiche im Verzögerungsinformationssignal, das im RAM für Paare von Ports 74-79 gespeichert ist, die nacheinander in der angegebenen Reihenfolge als Befehlsziele im Befehlssignal von einem zuerst angegebenen Port zu jedem der Ports 74-79 der eigenen Slave-Einheit 7 in der angegebenen Reihenfolge angegeben werden. Die CPU integriert dann die erfassten Verzögerungszeitlängen, um die Verzögerungszeitlänge für den als Befehlsziel angegebenen Port 74-79 zu berechnen.

Weiterhin löscht die CPU die Verzögerungszeitdauer jedes einzelnen Verzögerungsbereichs des im RAM gespeicherten Verzögerungsinformationssignals (Schritt S29) und setzt das individuelle Erfassungskennzeichen für die Verzögerungszeit zurück, das im RAM gesetzt wurde (Schritt S31), und die Verarbeitung fährt mit Schritt S33 fort.

In Schritt S33 werden zu dem Zeitpunkt, der vom Empfangszeitpunkt des Befehlssignals um die in Schritt S21 oder Schritt S27 berechnete Verzögerungszeitspanne verzögert wird, Betriebssignale von den Befehlszielports 74-79 an die Lasten 11 ausgegeben. Danach endet die Verarbeitungsreihe.

In der Ausführungsform entspricht Schritt S13 in FIG. 5, der von der CPU des Mikrocomputers 71 der Slave-Einheit 7 ausgeführt wird, einer Unterscheidungseinheit.

Darüber hinaus entspricht in der Ausführungsform der Schritt S17 von FIG. 5, der von der CPU des Mikrocomputers 71 der Slave-Einheit 7 ausgeführt wird, einer bestimmten Zahlenerfassungseinheit, und der Schritt S15 von FIG. 5, der von der CPU des Mikrocomputers 71 der Slave-Einheit 7 ausgeführt wird, entspricht einer Verzögerungsinformationserfassungseinheit.

Weiterhin entspricht in der Ausführungsform Schritt S5 von FIG. 4, der von der CPU des Mikrocomputers 71 der Slave-Einheit 7 durchgeführt wird, einer individuellen Informationserfassungseinheit, und Schritt S33 von FIG. 5, der von der CPU des Mikrocomputers 71 der Slave-Einheit 7 ausgeführt wird, entspricht einer Bestimmungseinheit.

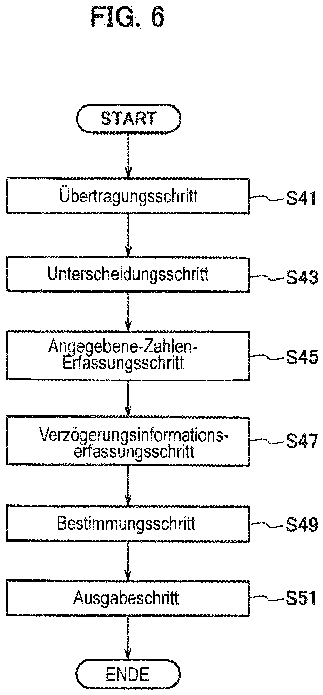

Als nächstes wird ein Fall beschrieben, in dem die gewünschten Lasten 11, die an jede Slave-Einheit 7 angeschlossen sind, in konstanten Zeitabständen im fahrzeuginternen LAN-System 1 der Ausführungsform eingeschaltet werden. In diesem Fall wird ein Netzwerkkommunikationsverfahren gemäß dem im Flussdiagramm von FIG. 6 dargestellten Verfahren durchgeführt.

Zunächst wird ein Übertragungsschritt durchgeführt (Schritt S41). In der Übertragungsstufe sendet die Steuerung 51 der Master-Einheit 5 das Steuersignal von FIG. 3A an den CXPI-Bus 3.

Zu diesem Zeitpunkt gibt die Steuerung 51 der Master-Einheit 5 den Wert des Einschaltintervalls der Lasten 11 als Verzögerungszeitdauer im Verzögerungsbereich des Steuersignals an. Darüber hinaus angegeben die Steuerung 51 die Ports 74-79 jeder Slave-Einheit 7 im Spezifikationsbereich des Ausgangsports in der angegebenen Reihenfolge, die der Einschaltreihenfolge der Lasten 11 entspricht.

Wenn die Master-Einheit 5 das Steuersignal an den CXPI-Bus 3 sendet, wird ein Unterscheidungsschritt (Schritt S43) nach dem Übertragungsschritt von Schritt S41 durchgeführt.

Im Unterscheidungsschritt empfängt der Mikrocomputer 71 jeder Slave-Einheit 7 ein Steuersignal vom CXPI-Bus 3. Wenn einer der Ports 74-79 der eigenen Slave-Einheit 7 als Befehlsziel im Ausgangsportspezifikationsbereich des empfangenen Befehlssignals angegeben ist, wird nach dem Übertragungsschritt von Schritt S41 ein bestimmter Zahlenerfassungsschritt (Schritt S45) durchgeführt.

Im Schritt zur Erfassung der angegebenen Anzahl erfasst der Mikrocomputer 71 in jeder Slave-Einheit 7 die angegebene Anzahl der Ports 74-79 der eigenen Slave-Einheit 7, die als Befehlsziele im Ausgangsportspezifikationsbereich des Befehlssignals angegeben sind.

Wenn der Mikrocomputer 71 jeder Slave-Einheit 7 die angegebene Anzahl von jedem der Ports 74-79 erfasst, die als Befehlsziele im Ausgangsportspezifikationsbereich des Befehlssignals in der angegebenen Reihenfolge angegeben sind, wird ein Verzögerungsinformationserfassungsschritt (Schritt S47) nach dem angegebenen Zahlenerfassungsschritt von Schritt S45 durchgeführt.

Im Schritt zur Erfassung von Verzögerungsinformationen erfasst der Mikrocomputer 71 jeder Slave-Einheit 7 den vorgegebenen Wert im Verzögerungsbereich des Steuersignals. Wenn der Mikrocomputer 71 den angegebenen Wert im Verzögerungsbereich des Befehlssignals erfasst, wird ein Bestimmungsschritt (Schritt S49) nach dem Verzögerungsinformationserfassungsschritt von Schritt S47 durchgeführt.

Im Bestimmungsschritt berechnet der Mikrorechner 71 jeder Slave-Einheit 7 eine Verzögerungszeitspanne vom Empfang des Befehlssignals bis zur Ausgabe eines Betriebssignals durch Integration des vorgegebenen Wertes in den Verzögerungsbereich des Befehlssignals, das im Verzögerungsinformationserfassungsschritt von Schritt S47 erfasst wurde. Die Anzahl der Male der Integration entspricht der angegebenen Anzahl (die angegebene Anzahl - 1) des Ports 74-79, der als Befehlsziel angegeben ist, das in dem angegebenen Zahlenerfassungsschritt von Schritt S45 erfasst wurde.

Wenn der Mikrocomputer 71 jeder Slave-Einheit 7 die Verzögerungszeitlängen der als Befehlsziele angegebenen Ports 74-79 berechnet, wird ein Ausgabeschritt (Schritt S51) nach dem Bestimmungsschritt von Schritt S49 ausgeführt.

Im Ausgabeschritt gibt der Mikrorechner 71 jeder Slave-Einheit 7 Betriebssignale an die Lasten 11 in Intervallen aus, die als die im Verzögerungsbereich des Befehlssignals angegebene Verzögerungszeitlänge von den Ports 74-79, die als Befehlsziele im Ausgangsportbereich des Befehlssignals in der angegebenen Reihenfolge der Befehlsziele angegeben sind. Dadurch werden die an die als Befehlsziele angegebenen Ports 74-79 angeschlossenen Lasten 11 nacheinander in den Intervallen eingeschaltet, die angegebene Werte im Verzögerungsbereich des Befehlssignals sind.

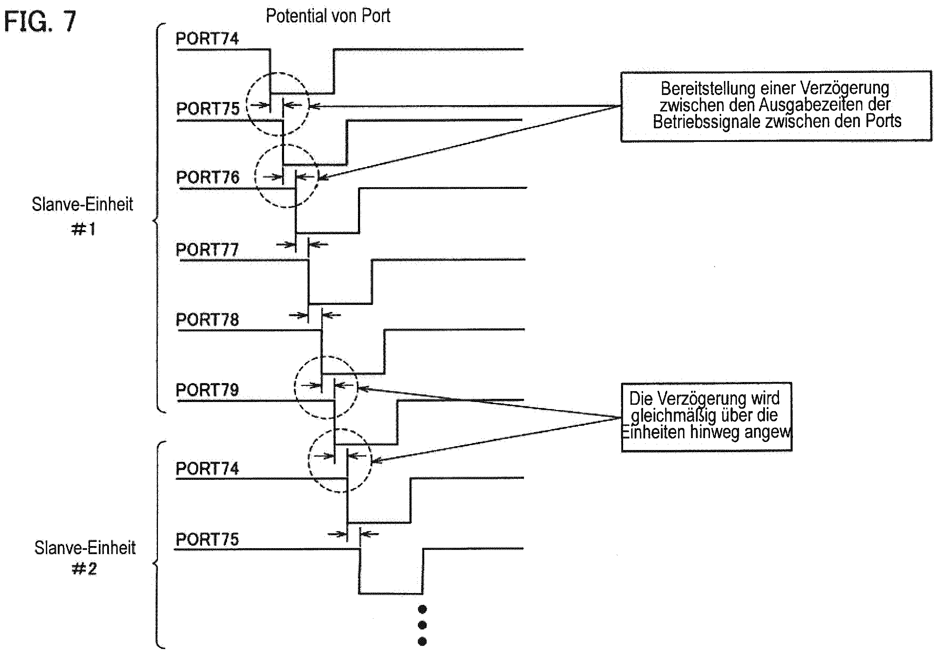

FIG. 7 ist ein Zeitdiagramm, das die Variation der Potentiale der Ports 74-79 in Verbindung mit der Ausgabe von Betriebssignalen in konstanten Intervallen veranschaulicht, die als Verzögerungszeitlänge von den Ports 74-79 jeder Slave-Einheit 7 angegeben sind.

Das Zeitdiagramm von FIG. 7 veranschaulicht einen Fall, in dem alle Ports 74 bis 79 der ersten Slave-Einheit 7 (ID_1) und die Ports 74 und 75 der zweiten Slave-Einheit 7 (ID_2), wie in FIG. 1 dargestellt, als Befehlsziele in dieser Reihenfolge im Bereich der Ausgangsportspezifikation des Befehlssignals von FIG. 3A angegeben sind.

Somit gibt die erste Slave-Einheit 7 (ID_1), die das von der Master-Einheit 5 auf den CXPI-Bus 3 übertragene Befehlssignal empfangen hat, ein niedriges aktives Betriebssignal von den ersten bis sechstens angegebenen Ports 74-79 in der angegebenen Reihenfolge sequentiell an die Lasten 11 zu Zeiten mit der im Verzögerungsbereich des Betriebssignals dazwischen angegebenen Verzögerungszeitlänge aus.

Außerdem gibt die zweite Slave-Einheit 7 (ID_2), die das von der Master-Einheit 5 an den CXPI-Bus 3 gesendete Befehlssignal empfangen hat, ein niedriges aktives Betriebssignal von den Ports 74 und 75, die als Siebte und Achte in der angegebenen Reihenfolge angegeben sind, sequentiell an die Lasten 11 zu Zeitpunkten mit der im Verzögerungsbereich des Betriebssignals dazwischen angegebenen Verzögerungszeitspanne aus.

Hier unterscheidet sich die Slave-Einheit 7 mit dem sechsten Port 79 als Befehlsziel von der Slave-Einheit 7 mit dem siebten Port 74 (der sechste Port 79 mit dem angegebenen sechsten Port in der angegebenen Reihenfolge ist in der ersten Slave-Einheit 7 (ID_1) enthalten und der siebte Port 74 mit dem angegebenen siebten Port in der angegebenen Reihenfolge ist in der zweiten Slave-Einheit 7 (ID_2) enthalten).

Wie vorstehend beschrieben, wird selbst wenn die beiden Ports 79 und 74 der beiden Slave-Einheiten 7 nacheinander als die Befehlsziele in der angegebenen Reihenfolge angegeben werden, ähnlich wie die anderen beiden Ports, die nacheinander als die Befehlsziele in den angegebenen Ordnungen angegeben werden, wie die Ports 74 und 75, die Ports 75 und 76, die Ports 76 und 77, die Ports 77 und 78 und die Ports 78 und 79 innerhalb derselben Slave-Einheit 7, wie in FIG. 7 dargestellt, ein Betriebssignal zu einem Zeitpunkt ausgegeben, der von dem Ausgabezeitpunkt der Betriebssignale der ehemaligen Ports 74-79 um die Verzögerungszeitspanne verzögert wird.

Anschließend wird ein Fall beschrieben, in dem die an jede Slave-Einheit 7 angeschlossenen Lasten 11 nacheinander mit individuell eingestellten Einschaltzeitdifferenzen zwischen zwei aufeinanderfolgenden Lasten 11 im fahrzeuginternen LAN-System 1 der Ausführungsform eingeschaltet werden. In diesem Fall sendet die Master-Einheit 5 zunächst das Verzögerungsinformationssignal von FIG. 3B und dann das Steuersignal von FIG. 3A auf den CXPI-Bus 3.

Bei der Übertragung des Verzögerungsinformationssignals angegeben die Master-Einheit 5 in den einzelnen Verzögerungsbereichen des Verzögerungsinformationssignals Unterschiede (Verzögerungszeitlängen) zwischen den Ausgabezeiten eines Betriebssignals zwischen zwei Ports 74-79 jeder Slave-Einheit 7, die nacheinander als Befehlsziele im Ausgangsportspezifikationsbereich des Befehlssignals in der Reihenfolge der Spezifikation der Befehlsziele angegeben sind.

Beim Übertragen des Befehlssignals gibt die Master-Einheit 5 im Verzögerungsbereich des Befehlssignals "0" an, um anzuzeigen, dass der Wert des Einschaltintervalls für jede Last 11 im Verzögerungsinformationssignal angegeben ist. Die Anschlüsse 74-79 jeder Slave-Einheit 7 sind in der angegebenen Reihenfolge entsprechend der Einschaltreihenfolge der Lasten 11 im Spezifikationsbereich des Ausgangsports angegeben, ähnlich wie beim Einschalten der gewünschten Lasten 11 in konstanten Abständen.

Wenn die Mastereinheit 5 das Verzögerungsinformationssignal an den CXPI-Bus 3 sendet, empfängt jede Slave-Einheit 7 das Verzögerungsinformationssignal vom CXPI-Bus 3. Die Master-Einheit 5 speichert dann den vorgegebenen Wert in jedem der einzelnen Verzögerungsbereiche des empfangenen Verzögerungsinformationssignals im RAM des Mikrocomputers 71.

Danach, wenn die Master-Einheit 5 ein Steuersignal an den CXPI-Bus 3 sendet, empfängt jede Slave-Einheit 7 das Steuersignal vom CXPI-Bus 3. Wenn einer der Ports 74-79 der eigenen Slave-Einheit 7 als Befehlsziel im Ausgangsportspezifikationsbereich des empfangenen Befehlssignals angegeben ist und der angegebene Wert im Verzögerungsbereich des Befehlssignals "0" ist, berechnet der Mikrocomputer 71 die Verzögerungszeitspanne vom Empfang des Befehlssignals bis zur Ausgabe des Betriebssignals mit dem angegebenen Wert in jedem einzelnen Verzögerungsbereich des im RAM gespeicherten Verzögerungsinformationssignals.

Insbesondere berechnet der Mikrorechner 71 die Verzögerungszeitspanne vom Empfang des Befehlssignals bis zur Ausgabe des Betriebssignals durch Integration der vorgegebenen Werte in die einzelnen Verzögerungsbereiche, die zwei aufeinanderfolgend vorgegebenen Ports 74-79 entsprechen, die mit der Nummer des Befehlsziels im Ausgangsportspezifikationsbereich des Befehlssignals aus den vorgegebenen Werten in den einzelnen Verzögerungsbereichen des Verzögerungsinformationssignals verglichen werden.

Somit werden von den als Befehlsziele im Ausgangsportspezifikationsbereich des Befehlssignals angegebenen Ports 74-79 in den einzelnen Verzögerungsbereichen des Verzögerungsinformationssignals in der angegebenen Reihenfolge der Befehlsziele in individuell festgelegten Intervallen Betriebssignale für die Lasten 11 ausgegeben. Daher werden die an die als Befehlsziele angegebenen Ports 74-79 angeschlossenen Lasten 11 in Intervallen, die in den einzelnen Verzögerungsbereichen des Verzögerungsinformationssignals individuell festgelegt sind, nacheinander eingeschaltet.

Gemäß dem fahrzeuginternen LAN-System 1 der Ausführungsform können die Lasten 11 zu unterschiedlichen Zeiten sequentiell eingeschaltet werden, indem an den Anschlüssen 74-79 der Slave-Einheit 7, an die die Lasten 11 angeschlossen sind, nur ein Steuersignal ausgegeben wird, um zu bewirken, dass Betriebssignale an die Lasten 11 ausgegeben werden, ohne dass bei jedem Zeitpunkt ein Steuersignal zum Einschalten einer entsprechenden der Lasten 11 ausgegeben wird.

Daher ist es auch bei Verwendung des CXPI-Busses 3 mit einer relativ niedrigen Kommunikationsgeschwindigkeit (Kommunikationskapazität) möglich, eine Netzwerkkommunikation zu realisieren, die in der Lage ist, ein Steuersignal zum sequentiellen Betrieb der Vielzahl von Lasten 11 von der Master-Einheit 5 aus zu übertragen.

Darüber hinaus entfällt die Definition von Timings für die Ausgabe von Betriebssignalen von den Ports 74-79 der Slave-Einheit 7, an die zwei nachträglich eingeschaltete Lasten 11 angeschlossen sind, indem Zeitdifferenzen zwischen den Sendezeiten der Steuersignale für die Ports 74-79 zum CXPI-Bus 3 definiert werden.

Anschließend können die Ausgangszeiten der Betriebssignale für zwei Lasten 11, die nacheinander eingeschaltet werden sollen, mit dem im Verzögerungsbereich des Befehlssignals, das einmal auf den CXPI-Bus 3 übertragen wird, angegebenen Wert oder den in den einzelnen Verzögerungsbereichen angegebenen Werten des Verzögerungsinformationssignals, das einmal auf den CXPI-Bus 3 übertragen wird, definiert werden.

Daher ist es auch bei Verwendung des CXPI-Busses 3 mit einer relativ niedrigen Kommunikationsgeschwindigkeit (Kommunikationskapazität) möglich, eine Netzwerkkommunikation zu realisieren, die in der Lage ist, ein Befehlssignal für den sequentiellen Betrieb der Vielzahl von Lasten 11 mit einer kurzen Zeitdifferenz zur Master-Einheit 5 zu übertragen.

Es ist zu beachten, dass die Konfiguration, bei der die Master-Einheit 5 vor dem Befehlssignal das Verzögerungsinformationssignal auf den CXPI-Bus 3 ausgibt, um eine individuelle Festlegung der Zeitpunkte zu ermöglichen, zu denen Betriebssignale an die Lasten 11 von den Anschlüssen 74-79 der Slave-Einheit 7 in den einzelnen Verzögerungsbereichen für das sequentielle Einschalten von Lastpaaren 11 ausgegeben werden, nicht erforderlich ist.

In der Ausführungsform wurde der Fall beschrieben, dass die Lasten 11 Lichtquellen sind, die ein- und ausgeschaltet werden. Die vorliegende Anwendung ist jedoch weithin anwendbar für einen Fall, in dem eine Vielzahl von Lasten zu unterschiedlichen Zeiten sequentiell betrieben wird.

In der Ausführungsform wurde der Fall beschrieben, in dem die Vielzahl von Lasten 11, die an die jeweiligen Ports 74-79 der Ein-/Ausgangsschnittstelle 73 der Slave-Einheiten 7 angeschlossen sind, nacheinander zu unterschiedlichen Zeiten über die Vielzahl von Slave-Einheiten 7 betrieben werden. Die vorliegende Anwendung ist jedoch auch auf einen Fall anwendbar, in dem eine Vielzahl von Lasten 11, die an die jeweiligen Ports 74-79 der Ein-/Ausgangsschnittstelle 73 einer Slave-Einheit 7 angeschlossen sind, nacheinander zu unterschiedlichen Zeiten betrieben werden.

## Patentansprüche

1. Netzwerkknoten, **gekennzeichnet durch**:
eine Unterscheidungseinheit, die konfiguriert ist, um zu unterscheiden, ob ein eigener Ausgangsport (74-79) als Befehlsziel in einem von einem Netzwerk (1) empfangenen Befehlssignal angegeben ist oder nicht;
eine Angegebene-Zahlen-Erfassungseinheit, die konfiguriert ist, um aus dem Befehlssignal eine angegebene Anzahl in einer angegebenen Reihenfolge im Befehlssignal des eigenen Ausgangsports (74-79) zu erfassen, der durch die Unterscheidungseinheit als das im Befehlssignal angegebene Befehlsziel gekennzeichnet ist;
eine Verzögerungsinformationserfassungseinheit, die konfiguriert ist, um Verzögerungsinformationen über eine Verzögerungszeitspanne einer Ausgabezeit eines Betriebssignals für eine Last (11) zu erfassen, die mit dem Ausgangsport (74-79) verbunden ist, was das Befehlsziel aus dem Befehlssignal ist, wobei die Unterscheidungseinheit unterschieden hat, dass der eigene Ausgangsport (74-79) als Befehlsziel angegeben ist;
eine Bestimmungseinheit, die konfiguriert ist, um einen Zeitpunkt zu bestimmen, zu dem das Betriebssignal an die Last (11) von dem eigenen Ausgangsport (74-79) basierend auf einem Empfangszeitpunkt des Befehlssignals ausgegeben wird, wobei die Unterscheidungseinheit unterschieden hat, dass der eigene Ausgangsport (74-79) als Befehlsziel aus dem Netzwerk (1), die von der angegebenen Zahlenerfassungseinheit erfasste angegebene Nummer und die von der Verzögerungsinformationserfassungseinheit erfassten Verzögerungsinformationen angegeben sind; und
eine Ausgabeeinheit (73), die konfiguriert ist, um das Betriebssignal an die Last (11) von dem eigenen Ausgangsport (74-79) zu dem von der Bestimmungseinheit bestimmten Zeitpunkt auszugeben.

2. Netzwerkknoten nach Anspruch 1, wobei
die Angegebene-Zahlen-Erfassungseinheit aus dem Befehlssignal, das eine Vielzahl von Ausgangsports (74-79) angibt, die einen Ausgangsport eines anderen Netzwerkknotens als Befehlsziele beinhalten, die angegebene Anzahl des eigenen Ausgangsports (74-79) in der angegebenen Reihenfolge erfasst.

3. Der Netzwerkknoten nach Anspruch 1, des Weiteren umfassend
eine individuelle Informationserfassungseinheit, die konfiguriert ist, um aus einem Verzögerungsinformationssignal, das Identifikationsinformationen der Verzögerungsinformationen in Header-Informationen aus Signalen, die vom Netzwerk (1) empfangen werden, umfasst, individuelle Verzögerungsinformationen zu erfassen, die als Verzögerungszeitlängen Unterschiede zwischen den Ausgabezeiten von zwei Ausgangsports (74-79) definieren, die nacheinander aus einer Vielzahl von Ausgangsports, die als Befehlsziele im Befehlssignal angegeben sind, in der angegebenen Reihenfolge der Befehlsziele angegeben sind, wobei
die Unterscheidungseinheit ein Signal verwendet, das Identifikationsinformationen des Befehlssignals in den Header-Informationen umfasst, die nach dem Verzögerungsinformationssignal vom Netzwerk (1) empfangen werden, um zu unterscheiden, ob der eigene Ausgangsport (74-79) als Befehlsziel im Befehlssignal angegeben ist oder nicht, und
in einem Fall, in dem die vom Befehlssignal durch die Verzögerungsinformationserfassungseinheit erfasste Verzögerungsinformation eine Referenz der einzelnen Verzögerungsinformationen anzeigt, die Bestimmungseinheit einen Zeitpunkt bestimmt, zu dem das Betriebssignal an die Last (11) vom eigenen Ausgangsport (74-79) ausgegeben wird, wobei als Verzögerungsinformation, die von der Verzögerungsinformationserfassungseinheit erfasst wird, Unterschiede der Ausgangszeitpunkte der zu bestimmten Anzahl definierten Betriebssignale, die früher verglichen werden mit der von der Angegebene-Zahlen-Erfassungseinheit in den einzelnen Verzögerungsinformationen erfassten individuellen Informationen, die von der individuellen Informationserfassungseinheit erfasst werden, aus dem Verzögerungsinformationssignal, das vor dem Befehlssignal vom Netzwerk (1) empfangen wurde, verwendet werden.

4. Ein Netzwerkkommunikationssystem, **gekennzeichnet durch**:
einen Masterknoten (5), der konfiguriert ist, um als Befehlsziele Ausgangsports (74-79) zum Ausgeben von Betriebssignalen an Lasten (11) zu unterschiedlichen Zeitpunkten in einer Reihenfolge von einem Ausgangsport mit einem früheren Ausgabezeitpunkt eines Betriebssignals zu spezifizieren und ein Befehlssignal an ein Netzwerk (1) zu übertragen, wobei das Befehlssignal Verzögerungsinformationen umfasst, die sich auf Verzögerungszeitlängen von Ausgabezeiten der Betriebssignale an die mit den Ausgangsports (74-79) verbundenen Lasten (11) beziehen, die die Befehlsziele von den Ausgangsports sind; und
einen Slave-Knoten (7), der konfiguriert ist, um das Befehlssignal aus dem Netzwerk (1) zu empfangen, wobei
der Netzwerkknoten nach einem der Ansprüche 1 bis 3 als Slave-Knoten (7) verwendet wird.

5. Netzwerkkommunikationsverfahren, **gekennzeichnet durch**:
einen Übertragungsschritt (S41), der von einem Masterknoten (5) durchgeführt wird, um ein Befehlssignal an ein Netzwerk (1) zu übertragen, wobei das Befehlssignal in einem Frame ein Befehlszielfeld umfasst, in dem Ausgangsports (74-79) zum Ausgeben von Betriebssignalen an Lasten (11) zu unterschiedlichen Zeitpunkten als Befehlsziele in einer Reihenfolge von einem Ausgangsport mit einem früheren Ausgabezeitpunkt eines Betriebssignals angegeben werden, und ein Verzögerungsinformationsfeld, in dem Verzögerungsinformationen in Bezug auf Verzögerungszeitlängen von Ausgangszeiten der Betriebssignale an die mit den Ausgangsports (74-79) verbundenen Lasten (11), die die Befehlsziele von den Ausgangsports (74-79) sind, eingestellt werden;
einen Unterscheidungsschritt (S43), der von einem Slave-Knoten (7) durchgeführt wird, um zu unterscheiden, ob ein eigener Ausgangsport (74-79) als eines der Befehlsziele im Befehlszielfeld des von einem Netzwerk (1) empfangenen Befehlssignals angegeben ist oder nicht;
einen Angegebene-Zahlen-Erfassungsschritt (S45), der vom Slave-Knoten (7) durchgeführt wird, um eine angegebene Zahl in einer vorgegebenen Reihenfolge des eigenen Ausgangsports (74-79) im Befehlszielfeld des Befehlssignals zu erfassen, wobei der eigene Ausgangsport (74-79) im Unterscheidungsschritt (S43) als ein Ausgangsport unterschieden wurde, der als eines der Befehlsziele im Befehlszielfeld des Befehlssignals angegeben ist;
einen Verzögerungsinformationserfassungsschritt (S47), der vom Slave-Knoten (7) durchgeführt wird, um die Verzögerungsinformation aus dem Verzögerungsinformationsfeld des Befehlssignals zu erfassen, für das im Unterscheidungsschritt unterschieden wurde, dass der eigene Ausgangsport (74-79) als eines der Befehlsziele angegeben ist;
einen Bestimmungsschritt (S49), der vom Slave-Knoten (7) durchgeführt wird, um einen Zeitpunkt für die Ausgabe des Betriebssignals an die Last (11) vom eigenen Ausgangsport (74-79) basierend auf dem Empfangszeitpunkt des Befehlssignals aus dem Netzwerk (1) zu bestimmen, für das in dem Unterscheidungsschritt (S43) unterschieden wurde, dass der eigene Ausgangsport (74-79) als eines der Befehlsziele angegeben ist, die angegebene Anzahl, die in dem angegebenen Zahlenerfassungsschritt (S45) erfasst wurde, und die Verzögerungsinformationen, die in dem Verzögerungsinformationserfassungsschritt (S47) erfasst wurden; und
einen Ausgabeschritt (S51), der vom Slave-Knoten (7) ausgeführt wird, um das Betriebssignal an die Last (11) vom eigenen Ausgangsport (74-79) zu dem im Bestimmungsschritt bestimmten Zeitpunkt auszugeben.

## Claims

1. A network node, **characterized by**
a distinguishing unit configured to distinguish whether or not an own output port (74-79) is specified as an instruction target in a command signal received from a network (1);
a specified number acquisition unit configured to acquire, from the command signal, a specified number in a specified order, in the command signal, of the own output port (74-79) distinguished by the distinguishing unit as the instruction target specified in the command signal;
a delay information acquisition unit configured to acquire delay information on a delay time length of an output timing of an operation signal for a load (11) connected to the output port (74-79) that is the instruction target from the command signal, in which the distinguishing unit has distinguished that the own output port (74-79) is specified as the instruction target;
a determination unit configured to determine a timing at which the operation signal is output to the load (11) from the own output port (74-79) based on a reception timing of the command signal, in which the distinguishing unit has distinguished that the own output port (74-79) is specified as the instruction target, from the network (1), the specified number acquired by the specified number acquisition unit, and the delay information acquired by the delay information acquisition unit; and
an output unit (73) configured to output the operation signal to the load (11) from the own output port (74-79) at the timing determined by the determination unit.

2. The network node according to claim 1, wherein
the specified number acquisition unit acquires, from the command signal specifying a plurality of output ports (74,79) including an output port of another network node as instruction targets, the specified number of the own output port (74-79) in the specified order.

3. The network node according to claim 1, further comprising
an individual information acquisition unit configured to acquire, from a delay information signal including identification information of the delay information in header information out of signals received from the network (1), individual delay information defining, as delay time lengths, differences between output timings of two output ports (74-79) specified successively out of a plurality of output ports specified as instruction targets in the command signal in the specified order of the instruction targets, wherein
the distinguishing unit uses a signal including identification information of the command signal in the header information received after the delay information signal from the network (1) to distinguish whether or not the own output port (74-79) is specified as an instruction target in the command signal, and
in a case where the delay information acquired from the command signal by the delay information acquisition unit indicates reference of the individual delay information, the determination unit determines a timing at which the operation signal is output to the load (11) from the own output port (74-79) using, as the delay information acquired by the delay information acquisition unit, differences of output timings of the operation signals defined at specified numbers that are former compared with the specified number acquired by the specified number acquisition unit in the individual delay information acquired, by the individual information acquisition unit, from the delay information signal having been received from the network (1) before the command signal.

4. A network communication system, comprising:
a master node (5) configured to specify, as instruction targets, output ports (74-79) to output operation signals to loads (11) at different timings in an order from an output port having an earlier output timing of an operation signal and transmit a command signal to a network (1), the command signal including delay information related to delay time lengths of output timings of the operation signals to the loads (11) connected to the output ports (74-79) that are the instruction targets from the output ports; and
a slave node (7) configured to receive the command signal from the network (1), wherein
the network node according to one of claims 1 to 3 is used as the slave node (7).

5. A network communication method, **characterized by**
a transmission step (S41), performed by a master node (5), of transmitting a command signal to a network (1), the command signal including, in a frame, an instruction target field in which output ports (74-79) to output operation signals to loads (11) at different timings are specified as instruction targets in an order from an output port having an earlier output timing of an operation signal, and a delay information field in which delay information related to delay time lengths of output timings of the operation signals to the loads (11) connected to the output ports (74-79) that are the instruction targets from the output ports (74-79) is set;
a distinguishing step (S43), performed by a slave node (7), of distinguishing whether or not an own output port (74-79) is specified as one of the instruction targets in the instruction target field of the command signal received from a network (1);
a specified number acquisition step (S45), performed by the slave node (7), of acquiring a specified number in a specified order of the own output port (74-79) in the instruction target field of the command signal, the own output port (74-79) having been distinguished in the distinguishing step (S43) as an output port specified as one of the instruction targets in the instruction target field of the command signal;
a delay information acquisition step (S47), performed by the slave node (7), of acquiring the delay information from the delay information field of the command signal for which it has been distinguished in the distinguishing step that the own output port (74-79) is specified as one of the instruction targets;
a determination step (S49), performed by the slave node (7), of determining a timing for outputting the operation signal to the load (11) from the own output port (74-79) based on reception timing, from the network (1), of the command signal for which it has been distinguished in the distinguishing step (S43) that the own output port (74-79) is specified as one of the instruction targets, the specified number acquired in the specified number acquisition step (S45), and the delay information acquired in the delay information acquisition step (S47); and
an output step (S51), performed by the slave node (7), of outputting the operation signal to the load (11) from the own output port (74-79) at the timing determined in the determination step.

## Revendications

1. Nœud de réseau, identifié par:
une unité de discrimination configurée pour déterminer si un port de sortie dédié (74-79) est ou non spécifié comme destination de commande dans un signal de commande reçu d'un réseau (1);
une unité de détection de nombre spécifié configurée pour détecter à partir du signal de commande un nombre spécifié dans un ordre spécifié dans le signal de commande du propre port de sortie (74-79) identifié par l'unité discriminante comme la cible de commande spécifiée dans le signal de commande;
une unité d'acquisition d'informations de retard configurée pour acquérir des informations de retard concernant une période de retard d'un temps de sortie d'un signal de fonctionnement pour une charge (11) connectée au port de sortie (74-79), qui est la cible de commande du signal de commande, dans laquelle l'unité de discrimination a discriminé que le propre port de sortie (74-79) est désigné comme la cible de commande;
une unité de détermination configurée pour déterminer un moment auquel le signal d'opération est délivré à la charge (11) à partir du port de sortie propre (74-79) sur la base d'un moment de réception du signal de commande, dans laquelle l'unité de discrimination a discriminé que le port de sortie propre (74-79) est indiqué comme une destination de commande du réseau (1), le nombre indiqué détecté par l'unité de détection du nombre indiqué, et les informations de retard détectées par l'unité de détection des informations de retard; et
une unité de sortie (73) configurée pour émettre le signal de fonctionnement vers la charge (11) à partir de son propre port de sortie (74-79) au moment déterminé par l'unité de détermination.

2. Noeud de réseau selon la revendication 1, dans lequel
l'unité de détection du nombre spécifié détecte le nombre spécifié du propre port de sortie (74-79) dans l'ordre spécifié à partir du signal de commande spécifiant une pluralité de ports de sortie (74-79) comprenant un port de sortie d'un autre nœud de réseau comme cibles de commande.

3. Noeud de réseau selon la revendication 1, comprenant en outre
une unité d'acquisition d'informations individuelles configurée pour acquérir, à partir d'un signal d'informations de retard comprenant des informations d'identification des informations de retard dans les informations d'en-tête des signaux reçus du réseau (1), des informations de retard individuelles définissant comme des longueurs de temps de retard des différences entre les temps de sortie de deux ports de sortie (74-79) spécifiés successivement à partir d'une pluralité de ports de sortie spécifiés comme des cibles d'instruction dans le signal d'instruction dans l'ordre spécifié des cibles d'instruction, dans lequel
ladite unité de discrimination utilise un signal comprenant une information d'identification dudit signal de commande dans ladite information d'en-tête reçue dudit réseau (1) après ledit signal d'information de retard pour discriminer si ledit propre port de sortie (74-79) est spécifié ou non comme une destination de commande dans ledit signal de commande, et
au cas où les informations de retard détectées par l'unité de détection des informations de retard à partir du signal de commande indiquent une référence des informations de retard individuelles, l'unité de détermination détermine un moment auquel le signal d'opération est émis vers la charge (11) à partir de son propre port de sortie (74-79), dans lequel en tant qu'informations de retard détectées par l'unité de détection des informations de retard, les différences dans les heures de début des signaux de fonctionnement définis à un certain nombre, qui sont comparées plus tôt avec les informations individuelles enregistrées par l'unité de détection du nombre spécifié dans les informations de retard individuelles enregistrées par l'unité de détection des informations individuelles, par rapport au signal d'information de retard reçu du réseau (1) avant le signal de commande.

4. Système de communication en réseau **caractérisé par**:
un noeud maître (5) configuré pour spécifier, en tant que destinations de commande, des ports de sortie (74-79) pour la sortie de signaux d'exploitation vers des charges (11) à différents moments dans un ordre à partir d'un port de sortie ayant une synchronisation de sortie précédente d'un signal d'exploitation, et pour transmettre un signal de commande à un réseau (1), le signal de commande comprenant des informations de retard relatives aux durées de retard des synchronisations de sortie des signaux d'exploitation vers les charges (11) connectées aux ports de sortie (74-79) qui sont les destinations de commande des ports de sortie; et
un noeud esclave (7) configuré pour recevoir le signal de commande du réseau (1), dans lequel
le nœud de réseau est utilisé comme nœud esclave (7) selon l'une des revendications 1 à 3.

5. Procédé de communication en réseau, **caractérisée par**:
une étape de transmission (S41) effectuée par un noeud maître (5) pour transmettre un signal de commande à un réseau (1), le signal de commande comprenant dans une trame un champ cible de commande dans lequel des ports de sortie (74-79) pour sortir des signaux d'attaque vers des charges (11) à des moments différents sont spécifiés comme cibles de commande dans un ordre provenant d'un port de sortie ayant un moment précédent de sortie d'un signal d'attaque, et un champ d'information sur les retards dans lequel sont définies les informations relatives aux délais de temporisation des temps de sortie des signaux d'entraînement vers les charges (11) connectées aux ports de sortie (74-79), qui sont les cibles des ports de sortie (74-79);
une étape de discrimination (S43) effectuée par un nœud esclave (7) pour déterminer si un port de sortie dédié (74-79) est spécifié ou non comme l'une des cibles de commande dans le champ cible de commande du signal de commande reçu d'un réseau (1);
une étape de détection de nombre spécifié (S45) effectuée par le noeud esclave (7) pour détecter un nombre spécifié dans un ordre prédéterminé du port de sortie propre (74-79) dans le champ cible de commande du signal de commande, dans lequel le port de sortie propre (74-79) a été discriminé dans l'étape de discrimination (S43) comme un port de sortie spécifié comme l'une des cibles de commande dans le champ cible de commande du signal de commande;
une étape de détection d'informations de retard (S47) effectuée par le noeud esclave (7) pour détecter les informations de retard du champ d'informations de retard du signal d'instruction pour lequel le port de sortie propre (74-79) a été discriminé dans l'étape de discrimination comme un port de sortie indiqué comme l'une des cibles d'instruction dans le champ de cible d'instruction du signal d'instruction;
une étape de détermination (S49) effectuée par le nœud esclave (7) pour déterminer un moment de sortie du signal d'opération vers la charge (11) à partir du propre port de sortie (74-79) sur la base du moment de réception du signal de commande provenant du réseau (1) discriminé dans l'étape de discrimination (S43), que ledit port de sortie propre (74-79) est spécifié comme l'une desdites cibles d'instruction, ledit nombre spécifié acquis dans ladite étape d'acquisition de nombre spécifié (S45), et lesdites informations de retard acquises dans ladite étape d'acquisition d'informations de retard (S47); et
une étape de sortie (S51) exécutée par le nœud esclave (7) pour délivrer le signal de fonctionnement à la charge (11) à partir de son propre port de sortie (74-79) au moment déterminé dans l'étape de détermination.
